# EUROPÄISCHE PATENTSCHRIFT

(11) **EP 3 732 952 B1**
(45) Veröffentlichungstag und Bekanntmachung des Hinweises auf die Patenterteilung: **23.02.2022**
(21) Anmeldenummer: 20000168.3
(22) Anmeldetag: 27.04.2020
(51) Int. Cl.: A01D 67/00, A01D 78/10

(54) **HEUWERBUNGSMASCHINE**
HAY-MAKING MACHINE
MACHINE DE FENAISON

(30) Priorität: 02.05.2019 DE 102019003082
(43) Veröffentlichungstag der Anmeldung: 04.11.2020
(73) Patentinhaber: Maschinenfabrik Bernard Krone GmbH & Co. KG, 48480 Spelle (DE)
(72) Erfinder: Afting, Andreas, 48488 Emsbüren (DE); Hemker, Johannes, 48739 Legden (DE)

(56) Entgegenhaltungen:
- EP-A1- 2 959 759
- DE-A1- 2 909 729
- DE-B- 1 189 307

## Beschreibung

Die vorliegende Erfindung betrifft eine Heuwerbungsmaschine zum Anbau an ein Dreipunkthubwerk eines Schleppers gemäß des Oberbegriffes des Patentanspruches 1.

Heuwerbungsmaschinen werden in unterschiedlichen Ausführungen bei der Grünfutterernte eingesetzt und sind dazu bevorzugt mit Aufnahmezinken aufweisenden, rotierenden Arbeitskreiseln ausgestattet, womit das am Boden liegende Erntegut aufgenommen und bei einem Zettwender für eine schnellere Trocknung wieder breit verteilt wird. Bei einer Ausführung als Kreiselschwader, wird das aufgenommene Erntegut für eine nachfolgende Aufnahme zur Bergung durch eine weitere Erntemaschine in einem Erntegutschwad abgelegt.

In weiteren Ausführungen unterscheiden sich die Heuwerbungsmaschinen grundlegend durch die Art ihrer Kopplung an sie ziehende und antreibende Zugmaschinen. In erster Linie dienen dazu allgemein bekannte landwirtschaftliche Schlepper. Insbesondere Heuwerbungsmaschinen mit großer Arbeitsbreite und hohem Gewicht weisen ein Fahrwerk auf, auf dem sie beim Straßentransport in der Art eines Anhängers hinter dem Schlepper hergezogen werden. Außer durch einer eventuellen begrenzten Stützlast an der Zugeinrichtung, wird der Schlepper nicht durch das Gewicht der gezogenen Heuwerbungsmaschine belastet. Anders sieht es dagegen bei Heuwerbungsmaschinen in der Ausführung als Anbaumaschinen aus. Diese haben kein Fahrwerk für den Straßentransport und sind durch eine Dreipunktverbindung mit dem Dreipunkthubwerk des Schleppers verbunden. Während der Arbeitsfahrt auf dem Feld wird das Maschinengewicht überwiegend durch Stützräder unter den Arbeitskreiseln abgestützt und durch die Dreipunktverbindung die Ausrichtung der Maschine sichergestellt. Für den Straßentransport jedoch, wird die Heuwerbungsmaschine durch das Dreipunkthubwerk komplett vom Boden abgehoben und somit das gesamte Gewicht der Maschine vom Schlepper getragen.

Diese erhebliche Gewichtsaufnahme, in der Regel am Heck des Schleppers, wirkt sich auf die Vorderachse sehr negativ gewichtsentlastend aus, was zu einer starken Beeinflussung der Lenkbarkeit und damit zu einem großen Sicherheitsrisiko führen kann.

Da besonders in Bergregionen eher kleine und leichte Heuwerbungsmaschinen in wendiger und einfacher Anbauausführung von Vorteil sind und diese dann bevorzugt mit leichten Serienschleppern oder auch speziellen Bergschleppern eingesetzt werden, ist eine optimierte Schwerpunktverlagerung zum Schlepper, in der Aushubstellung der Heuwerbungsmaschine von besonderer Bedeutung.

Unterschiedlichste Ausführungen der Anbaueinrichtungen für die Kopplung mit einem Dreipunkthubwerk sind aus dem Stand der Technik dazu bekannt. Die Druckschrift DE 29 09 729 A1 zeigt eine Heuwerbungsmaschine mit U- förmigen, frei schwenkbaren Bügeln zur Ankopplung eines Trägers an Unterlenker der Dreipunkt- Hebevorrichtung eines Schleppers. Durch sehr unterschiedliche Bedingungen der Anbausituationen an den Schleppern, sind die Ausführungen selten optimal und insbesondere bei Änderungen der Bedingungen, beispielsweise durch Wechsel des Schleppers oder auch nur Änderung der Bereifung am Schlepper, sind Anpassungen an den Anbaueinrichtungen der Heuwerbungsmaschinen kaum möglich. Somit sind Kombinationen von Schleppern und Heuwerbungsmaschinen in Anbauausführung kaum optimal für einen sicheren Betrieb aufeinander angepasst.

Aus der DE 102016012522 A1 ist jedoch eine Heuwerbungsmaschine bekannt, die zur Anpassung an verschiedene Anbausituationen an Schleppern längenveränderliche Rahmenelemente aufweist. Durch diese Verstellbarkeit der Tragelemente der Maschine ist eine vorteilhafte Verlagerung des Maschinenschwerpunktes in Richtung des Schleppers möglich. Leider sind dabei durch zusätzlichen Materialeinsatz das Gewicht und auch der Preis der Maschine nachteilig erhöht. Außerdem ist fraglich, ob der doch erhebliche Umbauaufwand bei jedem Schlepperwechsel in Kauf genommen wird, oder dann doch häufig mit der nicht optimalen Einstellung gefahren wird.

Hiervon ausgehend liegt der vorliegenden Erfindung die Aufgabe zugrunde, eine verbesserte Heuwerbungsmaschine der genannten Art zu schaffen, die durch eine einfache und kostengünstige Ausführung zur Verstellbarkeit von Tragelementen eine Anpassung an unterschiedliche Anbausituationen von Zug- und Antriebsmaschinen ermöglicht.

Erfindungsgemäß wird diese Aufgabe durch eine Heuwerbungsmaschine mit den kennzeichnenden Merkmalen des Patentanspruchs 1 gelöst. Weitere Merkmale und bevorzugte Ausgestaltungen der Erfindung ergeben sich aus den Unteransprüchen und der Beschreibung.

Durch die Ausführung der unteren Anschlusselemente des Anbaurahmens der Heuwerbungsmaschine nach der Erfindung als bewegliche Schwenkhebel, welche durch einen geringen Umbauaufwand zwei Betriebsstellungen einnehmen können, werden mit sehr geringen Mehrkosten stabile, verstellbare Tragelemente bereitgestellt. Ihre einfache Verstellbarkeit und damit Anpassung an verschiedene Anbausituationen der Schlepper trägt erheblich zur Verbesserung der Handhabung und Funktion der Heuwerbungsmaschine bei.

In einer konstruktiv einfachen Umsetzung der Verstellung der Schwenkhebel an dem Anbaurahmen der erfindungsgemäßen Heuwerbungsmaschine ist für jeden Schwenkhebel eine Lagerstelle vorgesehen. An dieser Lagerstelle wird der jeweilige Schwenkhebel nach Entfernen eines Lagerbolzens und Drehung des Schwenkhebels in entgegengesetzter Richtung in einer der beiden Betriebsstellungen wieder montiert und somit zur Anpassung an den Schlepper verstellt.

Die vertikale Beweglichkeit der Koppelpunkte für den Unterlenkeranschluss an Anbaumaschinen ist insbesondere bei Heuwerbungsmaschinen eine Notwenigkeit für eine gute Bodenanpassung der Arbeitswerkzeuge und Führung der Maschine und damit für ein gutes Arbeitsergebnis mit möglichst geringer Futterverschmutzung. Um die optimale Führung der Heuwerbungsmaschine in allen Arbeitssituationen zu gewährleisten, ist eine besonders leichtgängige Beweglichkeit in einem festgelegten Bereich in verschiedensten Belastungssituationen notwendig.

Aus dem Stand der Technik bekannte vertikale Gleitführungen, welche besonders bei den auftretenden Zug- und Druckbelastungen schwergängig reagieren und einem hohen Verschleiß ausgesetzt sind, sind an dieser Stelle als nachteilig anzusehen. Wesentlich vorteilhafter reagieren dort die in Schwenklagerungen gelagerten Schwenkhebel der Heuwerbungsmaschine nach der Erfindung bei gleichzeitig wesentlich geringerer Verschleißanfälligkeit.

Damit diese Vorteile auch unter allen Bedingungen und in den zumindest zwei Betriebsstellungen der verstellbaren Schwenkhebel vorhanden bleiben, sind durch diverse Versuchsreihen und Berechnungen Bedingungen ermittelt worden, die das sicherstellen.

Erfindungsgemäß ist dabei zunächst erkannt worden, dass die Schwenkhebel in ihren Einbausituationen vorteilhaft eine zumindest annähernd horizontale Ausrichtung aufweisen. Das bedeutet, dass die begrenzten Schwenkbereiche der Koppelpunkte an den verschwenkbaren Enden der Schwenkhebel in einem Bereich um eine gedachte horizontale Ebene angeordnet sind, die die Mittelachsen der Schwenklagerungen der Schwenkhebel schneidet. In einer vorteilhaften Weiterbildung der Heuwerbungsmaschine weisen die Koppelpunkte der Schwenkhebel in den zumindest zwei Betriebsstellungen unterschiedliche Schwenkbereiche auf. In der ersten Betriebsstellung, in der die Koppelpunkte der Schwenkhebel in Fahrtrichtung vor den Schwenkachsen der Schwenkhebel, also in Richtung des Schleppers liegen, liegt der Schwenkbereich symmetrisch zu der gedachten horizontalen Ebene. Die Ebene bildet somit die Winkelhalbierende des Schwenkwinkels. In der zweiten Betriebsstellung jedoch, in der die Koppelpunkte der Schwenkhebel in Fahrtrichtung hinter den Schwenkachsen der Schwenkhebel, also in Richtung der Anbaumaschine liegen, liegt der Schwenkbereich bei einer bevorzugten Ausführung der erfindungsgemäßen Heuwerbungsmaschine vorteilhaft nicht symmetrisch zu der horizontalen Ebene. Erfindungsgemäß ist erkannt worden, dass ein nach oben verlagerter Schwenkbereich für eine optimale Funktion von Vorteil ist.

Zur Verdeutlichung kann man die Schwenkhebelstellungen in einer Ansicht auf die linke Maschinenseite wie folgt als Uhrzeit erkennen. Für die erste Betriebsstellung ergibt sich ein Schwenkbereich von 7:00 bis 11:00 Uhr. Für die zweite Betriebsstellung ergibt sich ein Bereich von 1:00 bis 4:00 Uhr. Bevorzugt ergibt sich in einer optimierten Ausführung für die erste Betriebsstellung ein Bereich von 8:00 bis 10:00 Uhr. Für die zweite Betriebsstellung liegt der optimierte Schwenkbereich zwischen 1:30 und 3:30 Uhr.

In diesen Schwenkbereichen ist die Funktion der Schwenkhebel für eine optimale Führung der Heuwerbungsmaschine unter den gegebenen Bedingungen der Krafteinwirkung durch den Erntebetrieb auf sie am besten gegeben. Eine Selbsthemmung oder gar Blockade der Schwenkhebel durch ungünstige Winkel der Krafteinwirkungen werden vorteilhaft vermieden.

Die geschickte Gestaltung der Schwenkhebel in Abstimmung mit ihren Aufnahmen am Anbaurahmen bietet in beiden Einbausituationen jeweils obere und untere Anschlagpunkte zur Begrenzung der Schwenkwinkel. So ist gemäß einer konstruktiv einfachen Umsetzung einer bevorzugten Ausführung in jeder Betriebsstellung der Schwenkhebel die exakte Einhaltung der Schwenkbereiche ohne weitere Einstellarbeiten gewährleistet. Alternativ ist es denkbar verstellbare Anschläge vorzusehen, wobei diese insbesondere bei den auf sie wirkenden extremen Belastungen während der Transportfahrt zur Verstellung oder Beschädigung neigen können und dadurch den Schwenkbereich nachteilig verändern.

Die Verstellbarkeit der als Schwenkhebel ausgeführten Tragelemente zur Anpassung der Heuwerbungsmaschine nach der Erfindung an unterschiedliche Anbausituationen von Zug- und Antriebsmaschinen weist vorteilhaft zwei Einstellungen auf. Diese zwei Betriebsstellungen weisen einen guten Kompromiss zwischen guter Maschinenanpassung und Wirtschaftlichkeit auf. Eine mehrstufige, oder gar stufenlose Anpassungsausführung ist ebenfalls auch denkbar, aber konstruktiv durch erhöhten Materialaufwand und damit auch Maschinengewicht nachteilig. Ebenfalls würden der Umbauaufwand und die Gefahr von fehlerhaften Einstellungen steigen.

Der Verstellbereich der vorteilhaften zwei Betriebspositionen der Schwenkhebel ist nach Analyse der Anbausituationen der Schlepper so gewählt, dass in allen Betriebssituationen der erfindungsgemäßen Heuwerbungsmaschine, insbesondere bei Kurvenfahrten, Kollisionen zwischen Maschinen- und Schlepperteilen vermieden werden. Gleichzeitig ist dabei aber der Schwerpunkt der Heuwerbungsmaschine so weit wie möglich in Richtung des Schleppers verlagert, um eine größtmögliche Reduzierung der Entlastung der Vorderachse zu erzielen.

Durch die Richtungsumkehr der Schwenkhebel werden gleichzeitig die von den Schwenkhebeln zu übertragenden horizontalen Kräfte in ihren Richtungen umgekehrt. So wirken in der ersten Betriebsstellung überwiegend Zugkräfte und in der zweiten Betriebsstellung überwiegend Druckkräfte auf die Schwenkhebel. Durch diese sehr unterschiedlichen Kräfteeinwirkungen auf die Schwenkhebel ergeben sich unter anderem die bereits beschriebenen optimierten Schwenkhebelbereiche. Des Weiteren ist auch die Länge der Schwenkhebel in diesem Zusammenhang von besonderer Bedeutung.

Bei der genannten einfachen Ausführung mit jeweils einer Lagerstelle für die Schwenkhebel ergibt sich die Länge der Schwenkhebel durch den gewünschten Verstellweg durch Umbau der Schwenkhebel. Die Länge entspricht demnach der Hälfte des Verstellweges.

Eine besonders vorteilhafte Weiterbildung der Erfindung sieht vor, für jeden Schwenkhebel zwei Lagerstellen aufzuweisen. Durch diesen konstruktiven Trick ist es möglich, vorteilhafte Schwenkhebel einzusetzen, die länger sind als der halbe Verstellweg.

Die Vorteile längerer Schwenkhebel liegen darin, dass die unerwünschte horizontale Bewegung der Koppelpunkte bei der Verschwenkung innerhalb ihres Schwenkwinkels mit zunehmender Schwenkhebellänge und gleichbleibender vertikaler Bewegung abnimmt. Ebenfalls reduzieren sich, vorteilhaft für eine gute Empfindlichkeit der Bodenanpassung und zur Verschleißreduzierung, die Schwenkwinkelmaße bei gleichen vertikalen Bewegungsbereichen.

Die Erfindung wird im Folgenden unter Hinweis auf die beigefügten Figuren näher erläutert. Daraus ergeben sich auch weitere Einzelheiten und Vorteile der Erfindung. Es zeigen:
**Fig. 1** eine perspektivische Gesamtansicht eines Kreiselschwaders als Ausführungsbeispiel einer erfindungsgemäßen Heuwerbungsmaschine,
**Fig. 2** eine Kombination eines Schleppers mit einer angebauten Heuwerbungsmaschine nach Fig. 1,
**Fig. 3** eine Detail Seitenansicht der verstellbaren Tragelemente der Heuwerbungsmaschine nach Fig. 1 in einer ersten Betriebsstellung,
**Fig. 4** eine Detailansicht nach Fig. 3 in einer zweiten Betriebsstellung der verstellbaren Tragelemente.

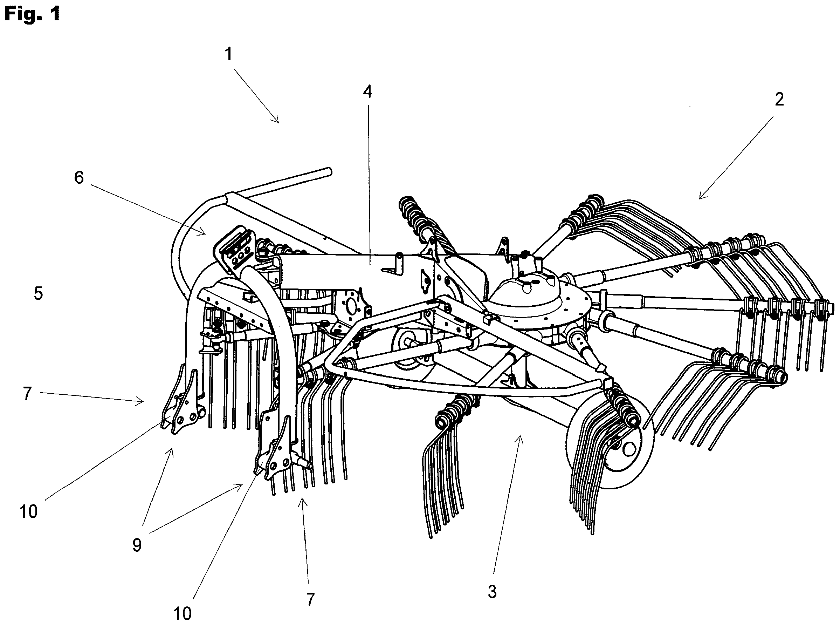

Fig. 1 zeigt als Ausführungsbeispiel einer erfindungsgemäßen Heuwerbungsmaschine 1 einen Kreiselschwader 1 umfassend einen angetriebenen Schwadkreisel 2, ein Fahrwerk 3 zur Abstützung der Maschine während der Erntefahrt, einen Tragholm 4 zur Verbindung des Schwadkreisels 2 mit dem Anbaurahmen 5, welcher einen oberen Koppelpunkt 6 und zwei untere Koppelpunkte 7 zur Verbindung mit einer Zug- und Antriebsmaschine 8 aufweist. Die unteren Koppelpunkte 7 sind erfindungsgemäß als verstellbare Tragelemente 9 in der Form von verschwenkbaren Schwenkhebeln 10 ausgeführt.

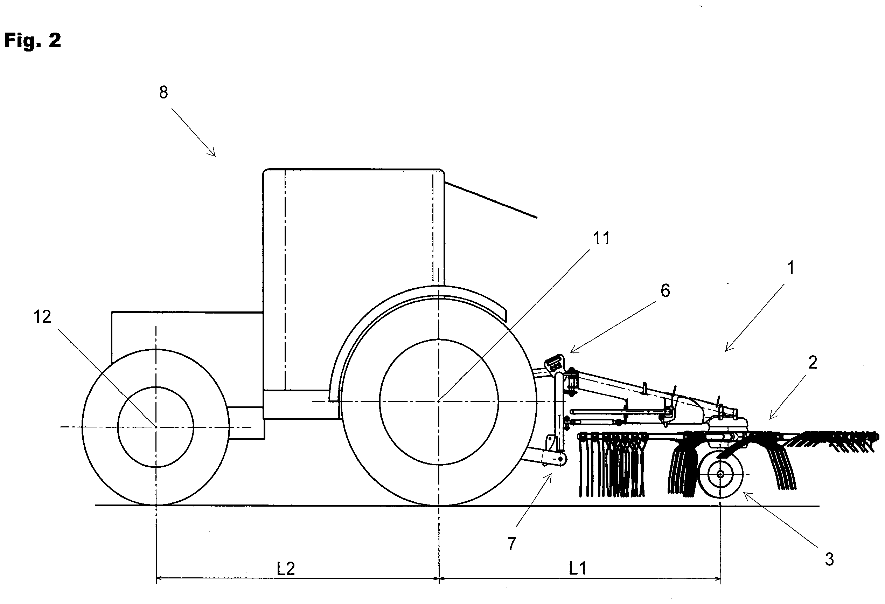

Fig. 2 stellt den Kreiselschwader 1 in Kombination mit einem landwirtschaftlichen Schlepper 8 als Zug- und Antriebsmaschine dar. Der Kreiselschwader 1 ist über die Koppelpunkte 6, 7 seines Anbaurahmens 5 mit dem Dreipunkthubwerk am Heck des Schleppers 8 in bekannter Weise gekoppelt. Für die Transportfahrt wird die Heuwerbungsmaschine 1 durch das Dreipunkthubwerk komplett vom Boden abgehoben, so dass das gesamte Gewicht der angebauten Heuwerbungsmaschine 1 vom Schlepper 8 getragen wird. Dieses Maschinengewicht verursacht über den Hebelarm L1, welcher dem Schwerpunktabstand der angebauten Maschine 1 zur Hinterachse 11 des Schleppers 8 entspricht ein Moment, welches um die Hinterachse 11 des Schleppers 8 gewichtsentlastend über den Hebelarm L2 auf die Vorderachse 12 des Schleppers 8 wirkt. Der Hebelarm L2 entspricht dabei dem Radstand des Schleppers 8.

Fig. 2 zeigt deutlich, wie sich eine Verlagerung des Schwerpunktes der angebauten Maschine 1 auf die Hebelverhältnisse L1 zu L2 auswirkt. Deshalb wird angestrebt, die angebaute Maschine 1 so nahe wie möglich zur Hinterachse 11 des Schleppers anzubauen, um so die Vorderachse 12 möglichst gering zu entlasten.

Durch die verstellbaren Tragelemente 9 der dargestellten Heuwerbungsmaschine 1 ist erfindungsgemäß eine Anpassung des Maschinenabstandes an verschiedene Anbausituationen von Schleppern 8 möglich. Da der Verstellbereich der Tragelemente 9 konstruktionsbedingt begrenzt ist, wirkt sich die Anpassung sehr unterschiedlich in Abhängigkeit des Schwerpunktabstandes L1 auf die Entlastungswirkung an der Vorderachse 12 aus. So wirkt sich der gleiche Verstellbereich der verstellbaren Tragelemente 9 bei einem angebauten, nicht dargestellten, Kreiselzettwender wesentlich stärker auf die Gewichtsveränderung an der Vorderachse 12 aus, da ein Zettwender konstruktionsbedingt einen kleineren Schwerpunktabstand L1 zum Schlepper aufweist als ein Kreiselschwader 1.

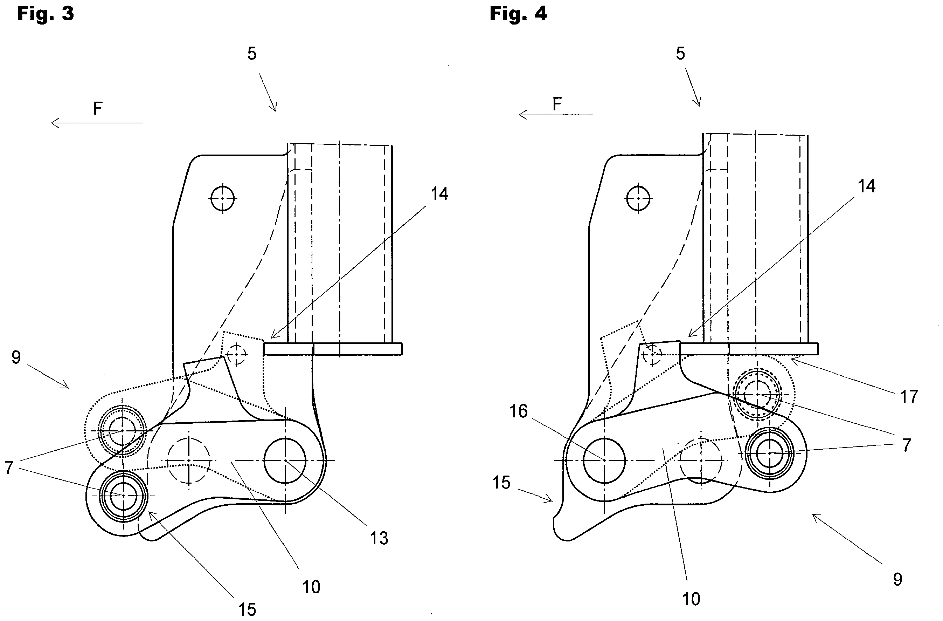

Fig. 3 und Fig. 4 zeigen im Detail Seitenansichten der verstellbaren Tragelemente 9, wobei zur besseren Erkennbarkeit der Schwenkhebel 10, Teile des Anbaurahmens 5 entfernt wurden.

Fig. 3 stellt eine erste Betriebsstellung der Tragelemente 9 dar. In dieser Betriebsstellung ist die angebaute Heuwerbungsmaschine 1 zur Vermeidung von Kollisionen mit den Rädern, oder anderen Teilen des Schleppers 8 mit einem möglichst großen Abstand zum Schlepper 8 angebaut. Die Schwenkhebel 10 sind dabei, mit den an den verschwenkbaren Enden aufweisenden Koppelpunkten 7 für die Unterlenker der Dreipunkthubeinrichtung des Schleppers 8 in Fahrtrichtung F ausgerichtet und in den hinteren Lagerstellen 13 am Anbaurahmen 5 um ihre Schwenkachsen begrenzt schwenkbeweglich gelagert. Zur Verdeutlichung der Schwenkbereiche der Schwenkhebel 10, sind in den Fig. 3 und 4 die Schwenkhebel 10 in ihren unteren Positionen in Volllinie als sichtbare Teile und in ihren oberen Positionen in Punktlinie als Unsichtbare gezeichnet. So ist in Fig. 3 zu erkennen, dass durch den Anschlagpunkt 14 die obere Begrenzung und dem Anschlagpunkt 15 die untere Begrenzung der Schwenkbewegung der Schwenkhebel 10 in der ersten Betriebsstellung gegeben sind.

Fig. 4 stellt eine zweite Betriebsstellung der Schwenkhebel 10 dar. In dieser Betriebsstellung ist die angebaute Heuwerbungsmaschine 1 näher zum Schlepper 8 hin verlagert. Wenn die Anbausituation des Schleppers 8 diese Stellung kollisionsfrei zulässt, ergeben sich dadurch erhebliche, erfindungsgemäße Vorteile für eine sichere Transportfahrt durch die geringere Entlastung der Vorderachse 12 des Schleppers 8.

Für den Umbau der Tragelemente 9 in die zweite Betriebsstellung werden lediglich die Schwenkhebel 10 demontiert, um 180 Grad gedreht und in die vorderen Lagerstellen 16 des Anbaurahmens 5 montiert. Wie der Fig. 4 zu entnehmen ist, bilden jetzt der Anschlagpunkt 14 die untere Begrenzung und der Anschlagpunkt 17 die obere Begrenzung der Schwenkbewegung der Schwenkhebel 10 in der zweiten Betriebsstellung. Durch diese einfache Verstellung der Tragelemente 9 der Heuwerbungsmaschine 1 nach der Erfindung ist so eine Anpassung an verschiedene Anbausituationen der Schlepper 8 ohne weitere Umbau- und Einstellmaßnahmen gegeben.

## Patentansprüche

1. Heuwerbungsmaschine (1) mit angetriebenen Bearbeitungswerkzeugen für am Boden liegendes Erntegut zum Anbau an ein, einen Oberlenker und zwei Unterlenker umfassendem, Dreipunkthubwerk einer landwirtschaftlichen Zug- und Antriebsmaschine, insbesondere Schlepper (8), mit einem, einen oberen (6) und zwei untere Koppelpunkte (7) aufweisenden Anbaurahmen (5), wobei die unteren Koppelpunkte (7) vertikal beweglich ausgeführt ist und die Heuwerbungsmaschine (1) verstellbare Tragelemente (9) zur Schwerpunktverlagerung zum Schlepper (8) aufweist, wobei die in zumindest zwei Betriebsstellungen verstellbaren Tragelemente (9) als um jeweils eine Schwenkachse verschwenkbare Schwenkhebel (10) ausgeführt sind, die an ihrem verschwenkbaren Ende die unteren Koppelpunkte (7) des Anbaurahmens (5) für die Unterlenker des Dreipunkthubwerks in beweglicher Ausführung aufweisen und in den zumindest zwei Betriebsstellungen begrenzte Schwenkbereiche der unteren Koppelpunkte (7) im Bereich einer, durch die Schwenkachsen der Schwenkhebel (10) gelegten horizontalen Ebene ermöglichen,
**dadurch gekennzeichnet, dass**
zur Änderung der Betriebsstellung, jedem Schwenkhebel (10) zumindest zwei Schwenklagerstellen (13, 16) am Anbaurahmen (5) zugeordnet sind.

2. Heuwerbungsmaschine (1) nach Anspruch 1, **dadurch gekennzeichnet, dass** in einer ersten Betriebsstellung der Tragelemente (9) die Schwenkhebel (10) hauptsächlich Zugkräfte und in einer zweiten Betriebsstellung hauptsächlich Druckkräfte im Erntebetrieb übertragen.

3. Heuwerbungsmaschine (1) nach Anspruch 2, **dadurch gekennzeichnet, dass** die Koppelpunkte (7) der Schwenkhebel (10) in der ersten Betriebsstellung in Fahrtrichtung (F), vor den Schwenkachsen der Schwenkhebel (10) liegen.

4. Heuwerbungsmaschine (1) nach Anspruch 2, **dadurch gekennzeichnet, dass** die Koppelpunkte (7) der Schwenkhebel (10) in der zweiten Betriebsstellung in Fahrtrichtung (F), hinter den Schwenkachsen der Schwenkhebel (10) liegen.

5. Heuwerbungsmaschine (1) nach einem der vorhergehenden Ansprüche, **dadurch gekennzeichnet, dass** sich die Schwenkbereiche der Schwenkhebel (10) in den zumindest zwei Betriebsstellungen in ihrer Ausrichtung zu einer horizontalen Ebene unterscheiden.

6. Heuwerbungsmaschine (1) nach einem der vorhergehenden Ansprüche, **dadurch gekennzeichnet, dass** die Schwenkbereiche der Schwenkhebel (10) durch Anschlagpunkte (14, 15, 17) am Anbaurahmen (5) begrenzt sind.

7. Heuwerbungsmaschine (1) nach einem der vorhergehenden Ansprüche, **dadurch gekennzeichnet, dass** der Schwenkbereich der unteren Koppelpunkte (7) der Schwenkhebel (10) in der ersten Betriebsstellung, in einer Ansicht auf die linke Maschinenseite als Uhrzeiger betrachtet, einen Bereich von 7 bis 11 Uhr umfasst.

8. Heuwerbungsmaschine (1) nach einem der vorhergehenden Ansprüche, **dadurch gekennzeichnet, dass** der Schwenkbereich der unteren Koppelpunkte (7) der Schwenkhebel (10) in der zweiten Betriebsstellung, in einer Ansicht auf die linke Maschinenseite als Uhrzeiger betrachtet, einen Bereich von 1 bis 5 Uhr umfasst.

9. Heuwerbungsmaschine (1) nach Anspruch 7, **dadurch gekennzeichnet, dass** der Schwenkbereich der unteren Koppelpunkte (7) der Schwenkhebel (10) in der ersten Betriebsstellung, als Uhrzeiger betrachtet, einen Bereich von 8:30 bis 9:30 Uhr umfasst

10. Heuwerbungsmaschine (1) nach Anspruch 8, **dadurch gekennzeichnet, dass** der Schwenkbereich der unteren Koppelpunkte (7) der Schwenkhebel (10) in der zweiten Betriebsstellung, als Uhrzeiger betrachtet, einen Bereich von 2:00 bis 3:00 Uhr umfasst.

11. Heuwerbungsmaschine (1) nach einem der vorhergehenden Ansprüche, **dadurch gekennzeichnet, dass** das Maß der horizontalen Verstellung der unteren Koppelpunkte (7) zwischen einer ersten und einer zweiten Betriebsstellung, kleiner ist als das doppelte Achsabstandsmaß der unteren Koppelpunkte (7) an den Schwenkhebeln (10) zu deren Schwenkachsen.

## Claims

1. Haymaking machine (1) having powered machining tools for crops lying on the ground for attachment to a three-point hoist of an agricultural towing and driving machine, in particular a tractor (8), which hoist comprises an upper link arm and two lower link arms, the haymaking machine having an attachment frame (5) which has an upper (6) and two lower coupling points (7), the lower coupling points (7) being designed so as to be vertically movable and the haymaking machine (1) having adjustable support elements (9) for shifting the centre of gravity to the tractor (8), the support elements (9) which are adjustable in at least two operating positions being designed as pivot levers (10) which can be pivoted about a pivot axis in each case, which pivot levers have, at their pivotable end, the lower coupling points (7) of the attachment frame (5) for the lower link arms of the three-point hoist in a movable design and which, in the at least two operating positions (7), allow limited pivot regions of the lower coupling points in the region of a horizontal plane set by the pivot axes of the pivot levers (10),
**characterised in that**
to change the operating position, each pivot lever (10) is assigned at least two pivot bearing points (13, 16) on the attachment frame (5).

2. Haymaking machine (1) according to claim 1, **characterised in that** in a first operating position of the support elements (9) the pivot levers (10) mainly transmit tensile forces and in a second operating position they mainly transmit compressive forces during harvesting.

3. Haymaking machine (1) according to claim 2, **characterised in that** the coupling points (7) of the pivot levers (10) in the first operating position are in front of the pivot axes of the pivot levers (10) in the direction of travel (F).

4. Haymaking machine (1) according to claim 2, **characterised in that** the coupling points (7) of the pivot levers (10) in the second operating position are behind the pivot axes of the pivot levers (10) in the direction of travel (F).

5. Haymaking machine (1) according to any of the preceding claims, **characterised in that** the pivot regions of the pivot levers (10) in the at least two operating positions differ in their alignment to a horizontal plane.

6. Haymaking machine (1) according to any of the preceding claims, **characterised in that** the pivot regions of the pivot levers (10) are limited by stop points (14, 15, 17) on the attachment frame (5).

7. Haymaking machine (1) according to any of the preceding claims, **characterised in that** the pivot region of the lower coupling points (7) of the pivot levers (10) in the first operating position, viewed as a clock hand in a view of the left side of the machine, comprises a range of from 7:00 to 11:00.

8. Haymaking machine (1) according to any of the preceding claims, **characterised in that** the pivot region of the lower coupling points (7) of the pivot levers (10) in the second operating position, viewed as a clock hand in a view of the left side of the machine, comprises a range of from 1:00 to 5:00.

9. Haymaking machine (1) according to claim 7, **characterised in that** the pivot region of the lower coupling points (7) of the pivot levers (10) in the first operating position, viewed as a clock hand, comprises a range of from 8:30 to 9:30.

10. Haymaking machine (1) according to claim 8, **characterised in that** the pivot region of the lower coupling points (7) of the pivot levers (10) in the second operating position, viewed as a clock hand, comprises a range of from 2:00 to 3:00.

11. Haymaking machine (1) according to any of the preceding claims, **characterised in that** the measurement of horizontal adjustment of the lower coupling points (7) between a first and a second operating position is smaller than twice the axis distance of the lower coupling points (7) on the pivot levers (10) to their pivot axes.

## Revendications

1. Machine de fenaison (1) comportant des outils entraînés pour des produits de récolte étendus sur le sol, pour être reliée à un mécanisme d'attelage en trois points comprenant un bras supérieur et deux bras inférieurs d'une machine agricole de traction et d'entraînement, notamment d'un tracteur (8), comprenant un châssis d'attelage (5) ayant un point haut (6) et deux points bas de couplage (7),
les points bas de couplage (7) étant mobiles verticalement et la machine de fenaison (1) comporte des éléments porteurs (9) réglables pour déplacer le centre de gravité par rapport au tracteur (8),
- les éléments porteurs (9) réglables dans au moins deux positions de fonctionnement sont réalisés comme leviers pivotants (10) mobiles respectivement autour d'un axe de pivotement et qui à l'extrémité pivotante comportent les points de couplage bas (7) du châssis d'attelage (5) pour les bras inférieurs du mécanisme d'attelage en trois points, selon une réalisation mobile et qui, dans au moins les deux positions de fonctionnement permettent d'avoir des plages de pivotement des points de couplage bas (7) dans la plage d'un plan horizontal passant par les axes de pivotement des leviers pivotants (10),
machine **caractérisée en ce que**
à chaque levier pivotant (10) sont associées au moins deux positions de palier de pivotement (13, 16) sur le châssis d'attelage (5) pour modifier la position de fonctionnement.

2. Machine de fenaison (1) selon la revendication 1,
**caractérisée en ce que**
dans une première position de fonctionnement des éléments de support (9), les leviers pivotants (10) transmettent principalement des efforts de traction et dans une seconde position de fonctionnement, ils transmettent principalement des efforts de compression en mode de collecte.

3. Machine de fenaison (1) selon la revendication 2,
**caractérisée en ce que**
les points de couplage (7) des leviers pivotants (10) se situent devant les axes de pivotement des leviers pivotants (10) dans la première position de fonctionnement, selon l'orientation du sens de circulation (F).

4. Machine de fenaison (1) selon la revendication 2,
**caractérisée en ce que**
les points de couplage (7) sont derrière les axes de pivotement des leviers pivotants (10) dans la seconde position de fonctionnement selon l'orientation du sens de circulation (F).

5. Machine de fenaison (1) selon l'une des revendications précédentes, **caractérisée en ce que**
dans au moins les deux positions de fonctionnement, les plages de pivotement des leviers pivotants (10) diffèrent par leur orientation dans le plan horizontal.

6. Machine de fenaison (1) selon l'une des revendications précédentes, **caractérisée en ce que**
les plages de pivotement des leviers pivotants (10) sont délimitées par des points de butée (14, 15, 17) du châssis d'attelage (5).

7. Machine de fenaison (1) selon l'une des revendications précédentes, **caractérisée en ce que**
dans la première position de fonctionnement selon une vue sur le côté gauche de la machine, la plage de pivotement des points bas de couplage (7) des leviers pivotants (10) se trouve dans une plage comprise entre 7 et 11 heures selon le sens des aiguilles d'une montre.

8. Machine de fenaison (1) selon l'une des revendications précédentes, **caractérisée en ce que**
la plage de pivotement des points bas de couplage (7) des leviers pivotants (10) dans la seconde position de fonctionnement, en regardant le côté gauche de la machine, se situe dans une plage comprise entre 1 et 5 heures selon le sens des aiguilles d'une montre.

9. Machine de fenaison (1) selon la revendication 7,
**caractérisée en ce que**
la plage de pivotement des points bas de couplage (7) des leviers pivotants (10) dans leur première position de fonctionnement, est une plage comprise entre 8:30 heures et 9:30 heures selon le sens des aiguilles d'une montre.

10. Machine de fenaison (1) selon la revendication 8,
**caractérisée en ce que**
la plage de pivotement des points de couplage bas (7) des leviers pivotants (10) dans leur seconde position, est une plage comprise entre 2:00 heures et 3:00 heures selon le sens des aiguilles d'une montre.

11. Machine de fenaison (1) selon l'une des revendications précédentes, **caractérisée en ce que**
le degré de déplacement horizontal des points bas de couplage (7) entre leur première et leur seconde position de fonctionnement est inférieur au double de l'entraxe des points bas de couplage (7) sur les leviers pivotants (10) par rapport aux axes de pivotement.
